# EUROPEAN PATENT SPECIFICATION

(11) **EP 2 920 481 B1**
(45) Date of publication and mention of the grant of the patent: **15.03.2017**
(21) Application number: 14725754.7
(22) Date of filing: 23.04.2014
(51) Int. Cl.: F16D 65/00, F16D 65/847

(54) **BRAKE SHIELD**
BREMSENABSCHIRMUNG
PANNEAU DE FREINAGE

(30) Priority: 23.04.2013 GB 201307295
(43) Date of publication of application: 23.09.2015
(73) Proprietor: Bentley Motors Limited, Crewe, Cheshire CW1 3PL (GB)
(72) Inventor: ELLIOT, Gary Stephen, Whitchurch Shropshire SY13 1TE (GB)
(74) Representative: Wilson Gunn
(86) International application number: PCT/GB2014/051258
(87) International publication number: WO 2014/174280

(56) References cited:
- EP-A1- 0 555 822
- WO-A1-03/071153
- DE-A1-102008 022 967
- US-A- 6 155 650

## Description

### Technical Field of the Invention

The present invention relates to a brake shield, a brake installation comprising a brake shield and a vehicle comprising a brake installation with a brake shield.

### Background to the Invention

Disc brakes are widely employed on road and other vehicles. To ensure efficient operation of disc brakes and prevent undue wear or damage it is important that they are kept clear of debris and water. To this end it is known to fit disc brakes with a shield which typically at least partially covers or encloses the disc to protect it from contamination by debris.

However, in operation disc brakes generate a great deal of heat which must be dissipated to ensure continued efficient operation of the brakes. Fitting a shield to disc brakes can reduce the flow of cooling air to the brakes.

The competing problems of protecting a disc brake from debris whilst providing adequate cooling have been addressed by a shield disclosed in WO 03/071153. This shield at least partly surrounds a brake disc and comprises a material of which the shape is influenced by heat. When the brake disc is cool the shield remains in a closed state to protect the brake disc from debris. When the brake disc heats up the shield changes shape, to an open state, and allows cooling air to flow to the disc directly.

This arrangement is rather complex, and only provides best protection from debris when the brake disc is cool. Indeed, in the open state there is a direct path for debris to flow to the disc. There is a possibility that debris which reaches the disc will become trapped by the shield when the disc cools and the shield returns to the closed state.

Embodiments of the present invention have been made in consideration of these problems.

DE 10 2008 022 967 A1 discloses a brake disc cover for a brake disc of a disc brake. The brake disc cover is formed from two pieces punched from a sheet metal blank. The two pieces overlap to form a labyrinth extending in parallel at the outside of the brake disc periphery to allow for ventilation of the brake disc whilst inhibiting the ingress of dirt.

### Summary of the Invention

According to the present invention there is provided a brake shield comprising a labyrinth ventilation material though which air may pass, but which resists the passage of debris, wherein the labyrinth ventilation material is a sheet material, a plurality of tortuous paths extend through the sheet material, distributed over the surface ofthe sheet, and the tortuous paths do not provide a line of sight through the material.

A labyrinth will tend to permit the flow of cooling air, which can easily travel along a complex path, but to resist passage of debris, such as grit, road dirt and even water droplets, which tend to travel in straight trajectories. Thus the shield conveniently facilities brake ventilation whilst protecting a brake from contamination.

The shield may be substantially formed from the labyrinth ventilation sheet material.

The tortuous paths may constrain a fluid flowing from one side of material to the other to flow along a reverse path. Where the material is a sheet material the tortuous paths may constrain fluid flowing from one side of the material to the other to flow along a path which is parallel to the plane of the sheet material.

The labyrinth ventilation material may be corrugated.

Flaps may be provided in the labyrinth ventilation material to provide ventilation paths through the material. Louvres could be provided in the labyrinth ventilation material to provide ventilation paths through the material. The louvres could be formed by pressing.

The labyrinth ventilation material may be formed from sheet material.

The brake shield may be arranged to be fitted to a disc brake installation. The brake shield could also be used with a drum brake installation. For instance, it could form part of the drum casing of a drum brake installation.

The labyrinth material may be corrugated or louvred, and the corrugations or louvres arranged to extend substantially vertically in use to enable water to drain from the brake shield. Alternatively, corrugations or louvres could extend substantially radially relative to a brake disc or drum.

### Detailed Description of the Invention

In order that the invention may be more clearly understood an embodiment thereof will now be described, by way of example only, with reference to the accompanying drawings, of which:
- Figure 1: is a front view of a brake installation for an automobile comprising a brake shield;
- Figure 2: is a side view of the installation of figure 1;
- Figure 3: is a front view of the material from which the brake shield of figures 1 and 2 is formed;
- Figure 4: is a plan view of the material of figure 3;
- Figure 5: is a sectional view along line A-A of figure 3;
- Figure 6: is a sectional view along line B-B of figure 3;
- Figure 7: is an isometric view of part of the material of figure 3; and
- Figure 8: is a similar view to figure 1 of a brake installation with an alternative embodiment of a brake shield.

Referring to the drawings, a disc brake installation for an automobile comprises a substantially circular ventilated brake disc 1 mounted to a hub or drive shaft 2 and a brake calliper 3. A non-ventilated disk could be used. The brake disc 3 rotates with the hub or drive shaft 2 relative to the calliper 3. The calliper is operative to urge brake pads (not shown) into contact with the brake disc 1, gripping the disc, in order to slow or stop rotation of the disc relative to the calliper and thus slow or stop a vehicle to which the installation is mounted. All this is conventional and well understood by a person of skill in the art.

A brake shield 4 is mounted relative to the brake disc 1. The shield 4 is mounted to a suspension knuckle (not shown) of a vehicle to which the brake disc installation is fitted. It could, though, be mounted to any other convenient structure that remains stationary relative to the brake disc, such as the calliper 3. The brake shield 4 is formed from a sheet of labyrinth ventilation material. The shield is of a substantially circular shape, of diameter slightly larger than the brake disc, with a cut out portion to accommodate the hub or shaft 2 and calliper 3. The shield 4 is positioned on the inboard side ofthe brake disc which is generally more exposed to contaminants than the outboard side, and is closely spaced from and extends parallel to the disc. The outboard side of the brake disc 1 is exposed, but will in use be protected by a wheel (not shown) mounted to the brake disc 1. Other arrangements are, of course, possible where a shield extends on both opposite sides of a brake disc. The shape, positioning and mounting of the shield relative to the brake disc is also largely conventional and will also be well understood by a person of skill in the art.

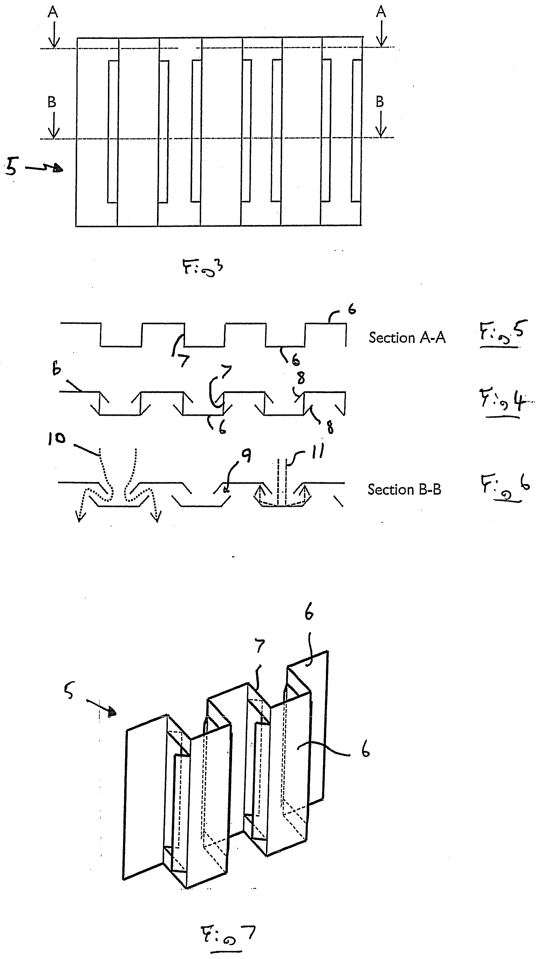

The brake shield is formed from a substantially flat sheet of labyrinth ventilation material. This material 5 is illustrated in figures 3 to 7. The sheet is perforated and tortuous paths are defined between openings on one side ofthe sheet and openings on the other side ofthe sheet. The labyrinth material comprises a corrugated sheet ofmetal, such as mild steel. The sheet has been formed by pressing or folding so that it includes a series of parallel, evenly spaced apart, alternating substantially right angle folds. This forms a sheet of material 5 with portions 6 extending substantially parallel to the plane of the labyrinth sheet alternating with portions 7 which extend substantially at right angles to the plane of the labyrinth sheet. Over part of the length of each of the portions 7 which extend at right angles to the plane of the labyrinth sheet pairs of flaps 8 are cut or punched out to form ventilation apertures 9. One flap 8 of each pair is bent outwards to one side of the sheet, and the other flap 8 is bent out towards the other side of the sheet. The corrugations and flaps in the sheet together define a tortuous path through the sheet. There is a fluid flow path through the sheet from one side to the other, but no line of sight through the sheet.

The brake shield is constructed from the labyrinth ventilation sheet material and installed so that the folds in the material forming the corrugations extent substantially vertically in an in use condition, when the vehicle to which the shield fitted is on level ground.

The tortuous path through the labyrinth ventilation material allows air to flow through the material, as shown at 10. Air can easily flow around the tortuous path through the material. However, the tortuous path prevents or at least usefully impedes passage of debris and water droplets from passing through the material. These will tend to travel with a straight trajectory and thus strike and then fall out of the sheet. Thus, the labyrinth material serves to protect the brake disc from debris, whilst permitting the flow of cooling air. In the event that the brake installation is partially or wholly submerged in water, or the shield is deluged with water, water will likely pass through the shield and it will also flow into the space between the shield and the brake disc. When the installation is not longer submerged, though, this water can quickly and easily drain from the disc and shield.

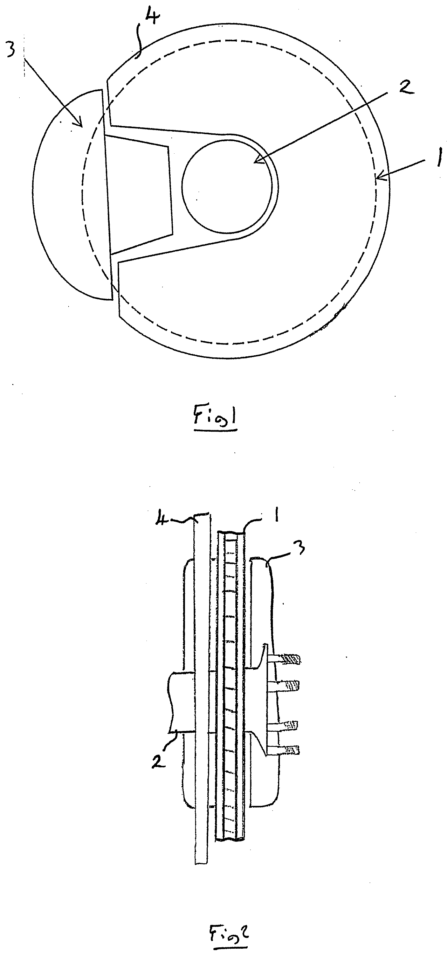

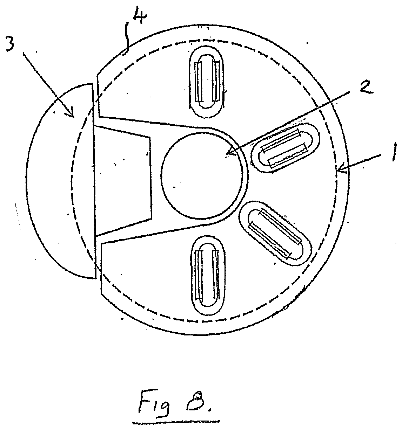

The brake shield could be formed from other suitable materials. An alternative configuration is shown in figure 8. In this figure, the same reference numerals are used as in figure 1 to denote corresponding components. In this arrangement substantially radially extending pressed louvers 12 are formed in a sheet of material forming the brake shield in order to provide a tortuous ventilation path through the shield.

The shield provides a convenient and economic solution to the problem of providing protection for a disc brake from debris whilst allowing air to flow onto the disc to provide cooling. It is particularly suited to installation on automobiles and other road vehicles, especially those fitted with carbon ceramic brake discs which are more sensitive to contaminants than iron discs as well as capable of generating higher temperatures. It could, however, be used on any other brake installation. It could be used on vehicles intended for off-road use where increased potential contaminants are encountered.

The above embodiment is described by way of example only. Many variations are possible without departing from the scope of the invention as defined in the appended claims.

## Claims

1. A brake shield (4) comprising a labyrinth ventilation material (5) through which air may pass, but which resists the passage of debris, **characterised in that** the labyrinth ventilation material is a sheet material, a plurality of tortuous paths extend through the sheet material, distributed over the surface of the sheet, and the tortuous paths do not provide a line of sight through the material.

2. A brake shield as claimed in claim 1 wherein the tortuous paths constrain fluid flowing from one side of the sheet material to the other to flow along a path which is parallel to the plane of the sheet material.

3. A brake shield as claimed in either claim 1 or 2 wherein the tortuous paths constrain a fluid flowing from one side of the labyrinth material to the other to flow along a reverse path.

4. A brake shield as claimed in any preceding claim wherein the labyrinth ventilation material is corrugated.

5. A brake shield as claimed in any preceding claim wherein flaps (8) are provided in the labyrinth ventilation material to provide ventilation paths through the material.

6. A brake shield as claimed in any preceding claim wherein louvres are provided in the labyrinth ventilation material to provide ventilation paths through the material.

7. A brake shield as claimed in any preceding claim wherein the labyrinth ventilation material is formed from sheet metal.

8. A brake shield as claimed in any preceding claim arranged to be fitted to a disc brake installation.

9. A brake installation fitted with a brake shield as claimed in any preceding claim.

10. A brake installation as claimed in claim 9 wherein the labyrinth ventilation material is corrugated or louvred and the corrugations or louvres are arranged to extend substantially vertically to enable water to drain from the brake shield.

11. A brake installation as claimed in claim 9 or claim 10 wherein the labyrinth ventilation material is corrugated or louvred and the corrugations or louvres are arranged to extend substantially radially relative to the brake disc or drum.

12. A vehicle comprising a brake installation as claimed in any of claims 9 to 11.

13. An automobile comprising a brake installation as claimed in any of claims 9 to 11.

## Patentansprüche

1. Bremsenabschirmung (4), aufweisend ein Labyrinth-artiges Belüftungsmaterial (5), durch welches Luft passieren kann, welches aber dabei den Durchtritt von Fremdpartikeln verhindert, **dadurch gekennzeichnet, dass** das Labyrinth-artige Belüftungsmaterial (5) ein plattenartiges Material ist, aufweisend eine Vielzahl gewundener Wege, die sich, verteilt über die Oberfläche der Platte, durch das plattenartige Material hindurch erstrecken, und wobei die gewundenen Wege keine Sichtverbindung durch das Material hindurch zur Verfügung stellen.

2. Bremsenabschirmung nach Anspruch 1, wobei die gewundenen Wege einen Fluidstrom hemmen, der entlang eines Weges, der parallel zur Ebene des plattenartigen Materials angeordnet ist, von der einen Seite des plattenartigen Materials zur anderen Seite fließt.

3. Bremsenabschirmung nach Anspruch 1 oder 2, wobei die gewundenen Wege einen Fluidstrom hemmen, der entlang eines umgekehrten Weges von der einen Seite des Labyrinth-artigen Materials zur anderen Seite fließt.

4. Bremsenabschirmung nach einem der vorangehenden Ansprüche, wobei das Labyrinth-artige Belüftungsmaterial gewellt ist.

5. Bremsenabschirmung nach einem der vorangehenden Ansprüche, wobei Klappen (8) im Labyrinth-artigen Belüftungsmaterial angebracht sind, um Belüftungswege durch das Material hindurch bereitzustellen.

6. Bremsenabschirmung nach einem der vorangehenden Ansprüche, wobei Schlitze im Labyrinth-artigen Belüftungsmaterial angebracht sind, um Belüftungswege durch das Material hindurch bereitzustellen.

7. Bremsenabschirmung nach einem der vorangehenden Ansprüche, wobei das Labyrinth-artige Belüftungsmaterial aus plattenartigem Metall geformt ist.

8. Bremsenabschirmung nach einem der vorangehenden Ansprüche derart angeordnet, dass sie für eine Scheibenbremsinstallation geeignet ist.

9. Bremseninstallation, ausgestattet mit einer Bremsenabschirmung nach einem der vorangehenden Ansprüche.

10. Bremseninstallation nach Anspruch 9, wobei das Labyrinth-artige Belüftungsmaterial gewellt oder geschlitzt ist, und die Wellen oder die Schlitze so angeordnet sind, dass sie sich im Wesentlichen vertikal erstrecken, um Wasser von der Bremsenabschirmung abzuleiten.

11. Bremseninstallation nach Anspruch 9 oder 10, wobei das Labyrinth-artige Belüftungsmaterial gewellt oder geschlitzt ist, und die Wellen oder die Schlitze so angeordnet sind, dass sie sich im Wesentlichen radial, relativ zur Bremsscheibe oder Bremstrommel, erstrecken.

12. Fahrzeug, aufweisend eine Bremseninstallation nach einem der Ansprüche 9-11.

13. Automobil, aufweisend eine Bremseninstallation nach einem der Ansprüche 9-11.

## Revendications

1. Panneau (4) de freinage, comprenant un matériau (5) d'aération en labyrinthe, dans lequel de l'air peut passer, mais qui résiste au passage de débris, **caractérisé en ce que** le matériau d'aération en labyrinthe est un matériau en feuille, une pluralité de chemins tortueux s'étend à travers le matériau en feuille en étant répartis sur la surface de la feuille et les chemins tortueux ne donnent pas une ligne de vision à travers le matériau.

2. Panneau de freinage suivant la revendication 1, dans lequel les chemins tortueux contraignent un écoulement de fluide d'un côté du matériau en feuille à l'autre à s'écouler le long d'un trajet, qui est parallèle au plan du matériau en feuille.

3. Panneau de freinage suivant la revendication 1 ou 2, dans lequel les chemins tortueux contraignent un écoulement de fluide d'un côté du matériau en labyrinthe à l'autre à s'écouler le long d'un chemin inverse.

4. Panneau de freinage suivant l'une quelconque des revendications précédentes, dans lequel le matériau d'aération en labyrinthe est ondulé.

5. Panneau de freinage suivant l'une quelconque des revendications précédentes, dans lequel des pattes (8) sont prévues dans le matériau d'aération en labyrinthe pour donner des chemins d'aération à travers le matériau.

6. Panneau de freinage suivant l'une quelconque des revendications précédentes, dans lequel des volets sont prévus dans le matériau d'aération en labyrinthe pour donner des chemins d'aération à travers le matériau.

7. Panneau de freinage suivant l'une quelconque des revendications précédentes, dans lequel le matériau d'aération en labyrinthe est formé à partir d'un métal en feuille.

8. Panneau de freinage suivant l'une quelconque des revendications précédentes, agencé pour être adapté à une installation de freinage à disque.

9. Installation de freinage à disque pourvue d'un panneau de freinage suivant l'une quelconque des revendications précédentes.

10. Installation de freinage suivant la revendication 9, dans laquelle le matériau d'aération en labyrinthe est ondulé ou pourvu de volets et les ondulations ou les volets sont agencés pour s'étendre sensiblement verticalement, afin de permettre à de l'eau d'être drainée du panneau de freinage.

11. Installation de freinage suivant la revendication 9 ou la revendication 10, dans laquelle le matériau d'aération en labyrinthe est ondulé ou muni de volets et les ondulations ou les volets sont agencés pour s'étendre sensiblement radialement par rapport au disque ou au tambour de frein.

12. Véhicule comprenant une installation de freinage suivant l'une quelconque des revendications 9 à 11.

13. Automobile comprenant une installation de freinage suivant l'une quelconque des revendications 9 à 11.
